Europäisches Patentamt

**European Patent Office**

**Office européen des brevets**

(19)

(11) **EP 1 297 515 B1**

(12) **EUROPÄISCHE PATENTSCHRIFT**

(45) Veröffentlichungstag und Bekanntmachung des Hinweises auf die Patenterteilung:
**08.09.2004 Patentblatt 2004/37**

(21) Anmeldenummer: **01962757.9**

(22) Anmeldetag: **21.06.2001**

(51) Int Cl.⁷: **G08G 1/0969**, G01C 21/34

(86) Internationale Anmeldenummer:
**PCT/EP2001/007026**

(87) Internationale Veröffentlichungsnummer:
**WO 2002/003351 (10.01.2002 Gazette 2002/02)**

(54) **ASSISTENZSYSTEM ZUR AUSWAHL VON STRECKEN**

ASSISTANCE SYSTEM FOR SELECTING ROUTES

SYSTEME D'ASSISTANCE DESTINE A LA SELECTION DE PARCOURS

(84) Benannte Vertragsstaaten:
**DE ES FR GB IT**

(30) Priorität: **04.07.2000 DE 10031787**

(43) Veröffentlichungstag der Anmeldung:
**02.04.2003 Patentblatt 2003/14**

(73) Patentinhaber: **DaimlerChrysler AG**
**70567 Stuttgart (DE)**

(72) Erfinder:
• **KOBER, Markus**
**59320 Ennigerloh (DE)**
• **KUHN, Werner**
**48151 Münster (DE)**
• **MÜLLER, Martin**
**72658 Bempflingen (DE)**
• **RÜTHER, Christoph**
**49145 Münster (DE)**
• **VOLLMER, Dieter**
**73614 Schorndorf (DE)**

(56) Entgegenhaltungen:
**EP-A- 0 547 548          EP-A- 1 045 224**
**DE-A- 19 650 844          DE-C- 19 525 291**
**DE-C- 19 605 458**

• **PATENT ABSTRACTS OF JAPAN vol. 2000, no. 04, 31. August 2000 (2000-08-31) & JP 2000 002553 A (HINO MOTORS LTD), 7. Januar 2000 (2000-01-07)**

EP 1 297 515 B1

**Beschreibung**

Die Erfindung betrifft ein Assistenzsystem zur Auswahl von Strecken gemäß Oberbegriff des Anspruchs 1.

Die DE 43 44 369 C2 beschreibt ein Assistenzsystem zur Auswahl einer Strecke mit einer Rechnereinrichtung, einer Speichereinrichtung und einer Ein- und Ausgabeeinrichtung,, wobei jede Strecke durch abgespeicherte fahrtbeeinflussende Streckenparameter beschrieben ist, und wobei nach der Eingabe von vorgegebenen Kriterien mittels einem Vergleich der fahrtbeeinflussenden Streckenparameter eine bestimmte Strecke von der Rechnereinrichtung ausgewählt und über eine Ausgabeeinrichtung ausgegeben wird, wobei als Kriterien ein besonders niedriger Energieverbrauch oder eine möglichst kurze Fahrzeit vorgegeben werden können.

Aufgabe der Erfindung ist es, ein Assistenzsystem zur Auswahl von Strecken anzugeben, welches eine differenziertere Suche nach einer Strecke mit vorgegebenen Streckeneigenschaften ermöglicht, wodurch der Komfort für den Benutzer bei der Streckenauswahl verbessert wird.

Diese Aufgabe wird durch die Merkmale des Anspruchs 1 gelöst. Die Unteransprüche betreffen vorteilhafte Aus- und Weiterbildungen der Erfindung.

Der Hauptgedanke der Erfindung besteht darin aus den fahrtbeeinflußenden Streckenparametern, die beispielsweise in Form von verschiedenen Attributen in einer digitalen Karte abgespeichert sind, makroskopische Streckenmerkmale zu berechnen und die Strecken mittels diesen makroskopischen Streckenmerkmale zu klassifizieren und dann durch Eingabe von gewünschten makroskopischen Streckenmerkmalen eine bestimmte Strecke durch einen Vergleich der makroskopischen Streckenmerkmale zu suchen und auszuwählen.

Wesentliche fahrtbeeinflussende Streckenparameter sind beispielsweise topographische Parameter wie Kurvenradien und Neigungen, verkehrsregelnde Parameter wie Geschwindigkeitsbegrenzungen, Überholverbote und Vorfahrtsregeln, bauliche Parameter wie Fahrspuranzahl, Straßentyp (Bundesautobahn, Land- und Ortsstraßen) Fahrbahnbreite und Streckeneinsicht. Die fahrtbeeinflußenden Streckenparameter werden beispielsweise durch Stichprobenfahrzeuge in Form von FCD (floating car data) quasikontinuierlich erfaßt, aufbereitet und abgespeichert. Zudem können andere Quellen, beispielsweise Straßenbauämter, Straßenpläne, Karten usw., für die Erfassung der fahrtbeeinflußenden Streckenparameter verwendet werden. Die kontinuierlich erfaßten fahrtbeeinflussenden Streckenparameter ergeben eine detaillierte Streckenbeschreibung, die für Simulationen, Berechnungen oder sonstige Auswertungen sehr hilfreich sind. Ein Vergleich zweier Strecken oder eine Klassifizierung ist aufgrund der Datenmenge aber nur schwer möglich.

Deshalb werden erfindungsgemäß aus den fahrtbeeinflussenden, erfaßten Streckenparametern makroskopische Streckenmerkmale definiert und berechnet. Anhand der makroskopischen Streckenmerkmale ist dann ein Vergleich zweier Strecken anhand weniger Kennzahlen oder eine Charakterisierung einer Strecke oder die Suche nach neuen Strecken mit ähnlichen makroskopischen Streckenmerkmalen sehr einfach möglich.

Aus den oben aufgeführten kontinuierlich erfaßten fahrtbeeinflussenden Streckenparametern werden als makroskopische Streckenmerkmale beispielsweise die horizontale Linienführung (Kurvigkeit, Kurvenanteil, Klassifizierung der Linienführung), die vertikale Linienführung (mittlere Neigung, Steigungs- und Gefälleanteile, maximale Neigung), die abschnittsgültige Prozentanteile für Geschwindigkeitsbegrenzungen, Überholverbote, Straßentyp und Fahrspuranzahl, die Häufigkeiten von ortsgültigen Merkmalen für Vorfahrtsregelungen (Ampeln, Stoppschilder, etc.) und die dynamisierte Pilotgeschwindigkeit (Mittelwert und Varianz sowie positive Geschwindigkeitsdifferenzen) berechnet.

Durch die makroskopischen Streckenmerkmale können auch besondere Benutzerwünsche, die der Benutzer beispielsweise in Form von Zahlenbereiche für die Kennzahlen der makroskopischen Streckenmerkmale angibt, berücksichtigt werden. So ist es beispielsweise möglich, daß ein Motorradfahrer den Wunsch hat, eine Strecke mit einer bestimmten horizontalen Linienführung - mit vielen Kurven- zu finden, oder ein Gespannfahrer (Fahrzeug mit Wohnwagen) möchte eine bestimmte horizontale und vertikale Linienführung (wenig Kurven und wenig Neigungsänderungen) vorgeben. Zudem kann das erfindungsgemäße Verfahren für die Auswahl von Teststrecken zur Fahrzeugerprobung verwendet werden, in dem bestimmte makroskopische Streckenmerkmale für eine Testfahrt vorgegeben werden.

Durch einen Vergleich der makroskopischen Streckenmerkmalen der gesuchten Strecke, die in Form von Kennzahlen angegeben sind, werden Strecken mit ähnlichen makroskopischen Streckenmerkmalen gesucht, wobei dem Benutzer die Strecken, die den gewünschten Kriterien am nächsten kommen, als empfohlene Strecke ausgegeben werden, so können beispielsweise die ersten drei Strecken ausgegeben werden. Dabei ist es unerheblich ob der Benutzer eine bestimmte Strecke von A nach B zurücklegen will oder ob er für Testzwecke oder zum Spaß irgendeine Strecke befahren will, die den gewünschten makroskopischen Streckenmerkmalen am nächsten kommt. Zudem ist es vorstellbar, daß der Benutzer eine bestimmte Entfernung von einem Ausgangspunkt vorgeben kann, innerhalb der die gesuchte Strecke liegen soll.

Bei einer weiteren Weiterbildung der Erfindung ist das Assistenzsystem zur Auswahl einer Strecke Teil eines Navigationssystems, wobei das Navigationssystem zur Auswahl einer Strecke zwischen einem Startpunkt und einem Zielpunkt aus mehreren alternativ möglichen Strecken auf das Assistenzsystem zugreift, um die optimale Strecke zwischen dem vorgegebenen Start und Zielpunkt auszuwählen und für die weitere Zielführung zu verwenden, wobei die Auswahl zusätzlich zu bekannten vorgegebenen Kriterien, wie beispielsweise niedriger Verbrauch, schnellstmögliche Verbindung oder kürzeste Entfernung zwischen Start und Zielpunkt, auch von der Vorgabe von makroskopischen Streckenmerkmalen abhängig ist. Als Eingabe- und Ausgabeeinrichtungen für das Assistenzsystem können bei dieser Ausführung die entsprechden Einrichtungen des Navigationssystems verwendet werden. Zudem ist es möglich die berechnete dynamisierte Pilotgeschwindigkeit zur Berechnung der voraussichtlichen Fahrzeit für eine Strecke bzw. einen Streckenabschnitt zu verwenden.

Bei einer besonders vorteilhaften Ausführung der Erfindung werden die makroskopischen Streckenmerkmale für beliebig lange Teilstrecken (Längenintervalle), beispielsweise für Längenintervalle von 1 km Länge, oder auch für eine Gesamtstrecke von A nach B berechnet und abgespeichert.

Für Testfahrten bei der Fahrzeugerprobung können bestimmte makroskopische Streckenmerkmalsintervalle vorgegeben werden, z.B. um die Bauteilbelastung aufgrund der Streckenführung zu maximieren, oder um eine belastungsäquvalente neue Strecke zu finden, dann wird innerhalb der erfaßten Strecken nach Teilstrecken gesucht, deren makroskopische Streckenmerkmalswerte innerhalb der vorgegebenen Intervallgrenzen liegen.

Nachfolgend wird ein Ausführungsbeispiels der Erfindung anhand der Zeichnungen näher beschrieben. Es zeigen:

Fig. 1    Blockschaltbild eines Assistenzsystems zur Streckenauswahl

Fig. 2    Berechnung der Kurvigkeit einer Strecke

Fig. 3    Mittlere Neigung eines Streckenabschnitts

Fig. 4    Geschwindigkeits- und Streckendifferenzen bei beschleunigter Bewegung

Fig. 5    Dynamisiertes Pilotgeschwindigkeitsprofil mit Beschleunigungs- und Verzögerungskurven

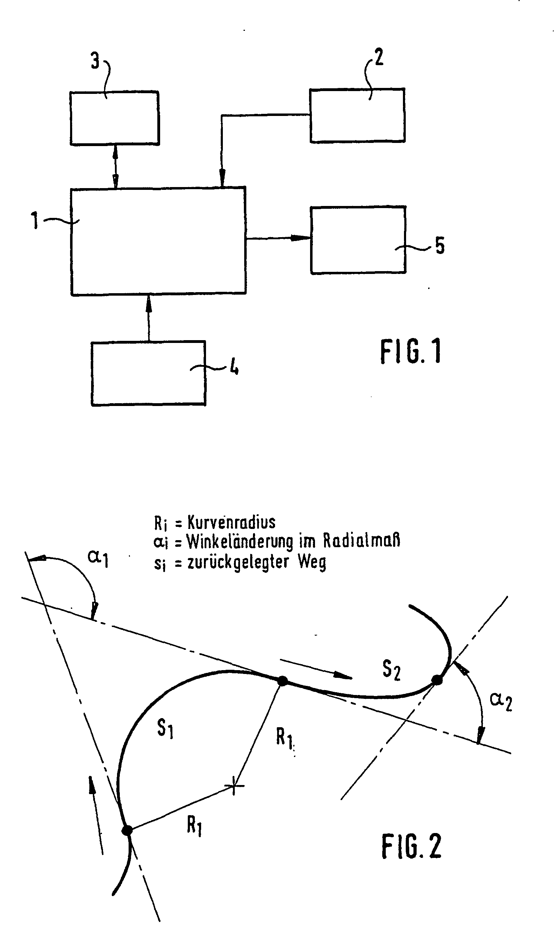

Wie aus Fig. 1 ersichtlich ist, umfaßt das Assistenzsystem zur Auswahl von Strecken, eine Rechnereinrichtung 1, eine Speichereinrichtung mit den erfaßten Streckenparametern 2, beispielsweise eine CD-ROM mit entsprechenden Leseeinrichtungen, eine Speichereinrichtung zum Abspeichern der ermittelten makroskopischen Streckenmerkmale 3, eine Eingabeeinrichtungen 4 und eine Ausgabeeinrichtungen 5, welche auch in einer Einheit zusammengefaßt sein können.

Nachfolgend wird mit Hilfe der Fig. 2 bis 5 beschrieben wie die makroskopischen Streckenmerkmale von der Rechnereinrichtung 1 ermittelt werden.

Durch statistische Auswertung und Klassifizierung der kontinuierlich erfaßten Streckenparameter besteht die Möglichkeit, makroskopische Streckenmerkmale zu bestimmen. Anhand der makroskopischen Streckenmerkmale können verschiedene Strecken besser beschrieben und objektiv verglichen werden. Für zwei verschiedene Strecken werden die makroskopischen Streckenmerkmale für bestimmte Streckenabschnittslängen, sogenannte Längenintervalle, berechnet. Die Berechnung läßt beliebig große Längenintervalle zu. Standardmäßig wird in der ein Längenintervall von einem Kilometer zugrunde gelegt. Somit können einerseits Streckenprofile der makroskopischen Streckenmerkmale dargestellt werden, andererseits können zwei Teilstrecken, über die sich die Längenintervalle komplett erstrecken, anhand der makroskopischen Streckenmerkmale objektiv verglichen werden. Erstrecken sich Längenintervalle über die Gesamtstrecken zwischen A und B, können diese verglichen und beschrieben werden.

Die makroskopischen Streckenmerkmale werden nach der horizontalen und vertikalen Linienführung, den abschnittsgültigen und ortsgültigen makroskopischen Streckenmerkmalen sowie der dynamisierten Pilotgeschwindigkeit gegliedert.

In den folgenden Berechnungen wird mit si die Streckendifferenz zwischen zwei Meßpunkten der kontinuierlich erfaßten Streckenparameter bezeichnet. Zur Berechnung der makroskopischen Streckenmerkmale in einem Längenintervall werden so viele Meßpunkte der kontinuierlich erfaßten Streckenparameter herangezogen, daß deren Streckendifferenzen dem Längenintervall entsprechen. Die Bestimmung von n ist mathematisch wie folgt definiert:

$$\sum_{i=1}^{n-1} s_i < \text{Längenintervall} \leq \sum_{i=1}^{n} s_i \qquad \text{(Bedingung 1)}$$

Die horizontale Linienführung beeinflußt die Geschwindigkeitswahl, die Geschwindigkeitsschwankungen und somit die Wahl der Gänge und den Kraftstoffverbrauch des Fahrzeugs. Der Verbrauch wird zusätzlich erhöht, wenn die Lenkunterstützung (Servo) bei kurvenreichen Strecken stark beansprucht wird. Der Mehrverbrauch kann je nach Art der Lenkunterstützung bis zu 8% betragen. Der Verlauf einer Trasse im Lageplan wird durch die makroskopischen Streckenmerkmale Kurvigkeit, Kurvenanteil und Klassifizierung der Linienführung beschrieben.

Die Kurvigkeit ist die Summe der absoluten Winkeländerungen pro Längeneinheit in gon/km (Es gilt: 400 gon (Neugrad) = 360° (Winkelmaß) = 2π (Radialmaß)). Fig. 2 veranschaulicht die Berechnung der Kurvigkeit.

Die Kurvenradien für Links- und Rechtskurven werden durch positive und negative Werte dargestellt. Tritt eine Kurventypänderung in der Trassenführung ein, z.B. Wechsel von einer Links- in eine Rechtskurve, so wird der durch die Kurve bedingte Winkel αi der gesamten Richtungsänderung anhand zweier Tangenten berechnet:

$$\frac{\text{Streckendifferenz}}{\text{Kurvenradius}} = \frac{s_i}{R_i} = \alpha_i \text{ (Winkeländerung im Radialmaß)}$$

Die entsprechende Winkeländerung βi in Neugrad [gon] ergibt sich zu:

$$\beta_i = \frac{200 \times \alpha_i}{\pi} = \frac{200}{\pi} \times \frac{s_i}{R_i}$$

Zur Berechnung der Kurvigkeit im Längenintervall wird die Summe der absoluten Winkeländerungen durch die Summe der Streckendifferenzen si dividiert und in gon/km normiert:

$$\text{Kurvigkeit } [gon/km] = \frac{\sum_{i=1}^{n} |\beta_i| [gon]}{\sum_{i=1}^{n} s_i [m]} \times 1000 \, [m/km]$$

(n gemäß Bedingung 1)

Der Kurvenanteil ist der prozentuale Längenanteil der Kurven am Längenintervall. Dabei werden nur Kurven mit Radien kleiner als 500 m berücksichtigt, weil bei größeren Radien fahrdynamisch i.d.R. kein Streckeneinfluß auf die Fahrgeschwindigkeit besteht.

Die horizontale Linienführung wird nach den Kriterien weit und stetig, eng, aber stetig oder unstetig und eng klassifiziert. Die Klassifizierung der horizontalen Linienführung wird mit Hilfe der Kurvigkeit und dem Anteil der Kurven wie aus Tabelle 1 ersichtlich festgelegt.

Tab. 1:

| Klassifizierung der horizontalen Linienführung | | |
|---|---|---|
| Es gilt | Prüfung | Klasse |
| — | Kurvigkeit < 250 gon/km | Weit und stetig |
| Kurvigkeit > 250 gon/km | Kurvigkeit < 350 gon/km oder Kurvigkeit < 5 x Kurvenanteil + 100 gon/km | eng, aber stetig |
| Kurvigkeit > 350 gon/km und Kurvigkeit > 5 x Kurvenanteil + 100 gon/km | — | unstetig und eng |

Der Kurvenanteil muß berücksichtigt werden, da bei gleicher Kurvigkeit die gefahrenen Geschwindigkeiten mit sinkendem Kurvenanteil tendenziell fallen. Ein niedriger Kurvenanteil bedeutet, daß sich zwar mehr Geraden in einem Abschnitt befinden, aber wegen der gleichen Kurvigkeit die Kurven im Mittel enger sein müssen, so daß das Fahrverhalten insgesamt unstetig wird. Ab 600 gon/km ist die Linienführung generell unstetig.

Weite und stetige Trassenführungen erlauben das Befahren des Streckenabschnitts mit einer zulässigen Höchstgeschwindigkeit außerhalb geschlossener Orte von 100 km/h ohne daß sich die Linienführung geschwindigkeitsdämpfend auswirkt.

Enge, aber stetige Linienführungen führen zu konstanter Fahrweise ohne große Beschleunigungs- bzw. Verzögerungsphasen auf einem Geschwindigkeitsniveau unterhalb der zulässigen Höchstgeschwindigkeit. Die Linienführung wirkt sich hierbei geschwindigkeitsdämpfend aus.

Strecken mit unstetiger und enger Linienführung haben einen erheblichen Einfluß auf die Geschwindigkeitswahl, wobei infolge ungünstiger Radienrelationen große Geschwindigkeitsdifferenzen auftreten können. Häufige Verzögerungs- und Beschleunigungsvorgänge kennzeichnen den Verlauf.

Die Geschwindigkeiten auf Landstraßen werden auch durch die vertikale Linienführung beeinflußt. Maximalgeschwindigkeiten werden fahrzeugunabhängig bei 2% Gefälle erreicht, bei Steigungen ab 4% nehmen die Geschwindigkeiten stetig ab, dagegen steigt die Gleichförmigkeit des Geschwindigkeitsverlaufs. Steigungen belasten den gesamten Triebstrang vom Kühler bis zu den Radseitenwellen und beeinflussen den Verbrauch erheblich. Bei Gefälle werden hauptsächlich die Bremsen belastet. Die vertikale Linienführung wird durch die makroskopischen Streckenmerkmale mittlere Neigung, Steigungs- und Gefälleanteile sowie den maximalen Neigungen beschrieben.

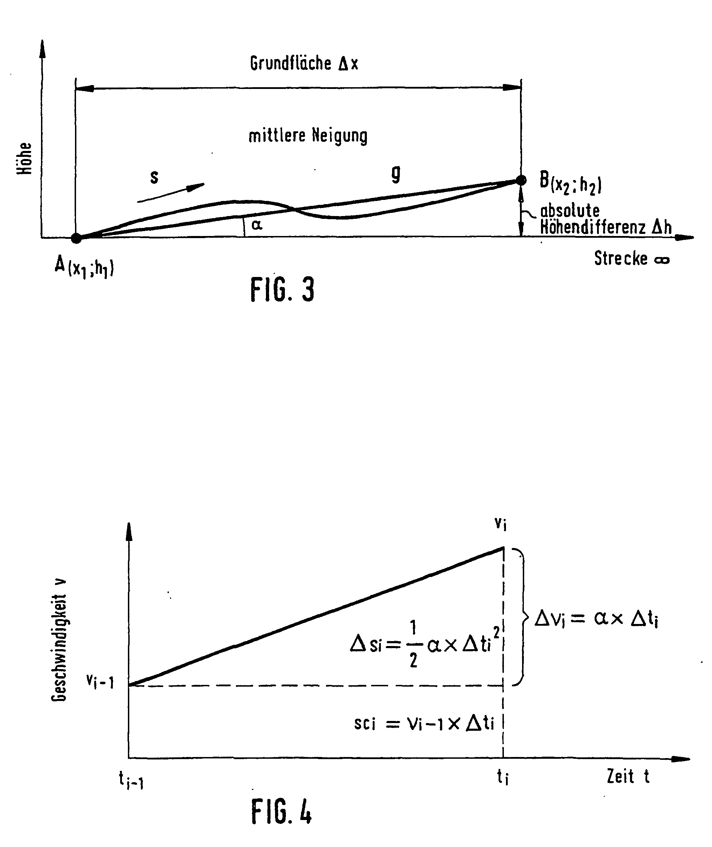

Die mittlere Neigung beschreibt die Tendenz einer Fahrt auf einem Streckenabschnitt. Erstreckt sich das Längenintervall über einen kompletten Rundkurs, ist die mittlere Neigung trivialerweise annähernd null. Bei der Fortbewegung eines Fahrzeugs treten die beiden Energieformen Bewegungsenergie (kinetische Energie) und Lageenergie (potentielle Energie) in Erscheinung. Das Befahren von Steigungen erfordert Hebearbeit, in Gefällabschnitten kann diese Arbeit wieder zurückgewonnen werden. Die Energiebilanz eines Fahrzeugs wird mit Hilfe der mittleren Neigung bestimmt, welche zwischen Anfangs- und Endpunkt eines Längenintervalls ermittelt wird, siehe Fig. 3.

Die Punkte A und B bilden die Anfangs- bzw. Endhöhe des dargestellten Längenintervalls. Zur Ermittlung der mittleren Neigung zwischen den beiden Punkten wird folgende Formel verwendet:

$$\text{mittlere Neigung[\%]} = 100 \times \frac{\Delta h}{\Delta x} = 100 \times \tan \alpha$$

$$= 100 \times \tan(\arcsin \frac{\Delta h}{g})$$

Bei physikalischen und technischen Berechnungen ist für Winkel bis 10°, dies entspricht etwa 17% Steigung oder Gefälle, die Näherung: $\sin(\alpha) \approx \tan(\alpha) \approx \alpha$ zulässig. Deshalb können auch die geringen Längenunterschiede zwischen g und $\Delta x$ vernachlässigt werden und somit auch die Längenunterschiede zwischen g und der tatsächlich gefahrenen Strecke s. Es gilt näherungsweise:

$$\text{mittlere Neigung[\%]} = 100 \times \tan(\arcsin \frac{\Delta h}{s})$$

Die Steigungs- und Gefälleabschnitte werden anhand fahrdynamischer Erfahrungen und Berechnungen in je vier Klassen eingeteilt. Dabei sind die Einflüsse auf gefahrene Geschwindigkeiten und Gangwahl die wesentlichen Kriterien, siehe Tabelle 2.

Tab. 2:

| Steigungsklassen über Geschwindigkeits- und Gangbeeinflussung | | |
|---|---|---|
| Klasse | Einflüsse auf | |
| | gef. Geschwindigkeit | Gangwahl |
| 0 - 2% | — | — |
| 2 - 5% | gering | — |
| 5 - 8% | stark | gering |
| > 8% | stark | stark |

Das makroskopische Streckenmerkmal Steigungs- und Gefälleanteile beschreibt die prozentualen Längenanteile der Steigungsund Gefälleklassen am Längenintervall. Für alle Streckendifferenzen si im Längenintervall wird die mittlere Neigung ermittelt und den oben genannten Klassen zugeordnet. Aus der Summe der Streckendifferenzen jeder Klasse werden ihre prozentualen Längenanteile am Längenintervall ermittelt.

Innerhalb eines Längenintervalls werden die maximale Steigung und das maximale Gefälle bestimmt. Diese sind Maße für die hervorgerufenen Spitzenbelastungen.

Die kontinuierlich erfaßten Streckenparameter Geschwindigkeitsbegrenzung, Überholverbot, Straßentyp und Spurenanzahl gelten für verschieden lange Streckenabschnitte. Die entsprechenden makroskopischen Streckenmerkmale sind die prozentualen Längenanteile dieser Abschnitte am gesamten Längenintervall.

Die Geschwindigkeitsbegrenzungen werden explizit durch Schilder oder implizit vorgegeben. Implizite Geschwindigkeitsbegrenzungen sind beispielsweise die zulässige Höchstgeschwindigkeit für alle Kraftfahrzeuge von 50 km/h innerhalb geschlossener Ortschaften und außerhalb geschlossener Ortschaften für Kraftfahrzeuge bis 3,5 t 100 km/h und für Kraftfahrzeuge mit höherem Gesamtgewicht 60 km/h.

Für Abschnitte mit gleicher, explizit oder implizit vorgegebener Höchstgeschwindigkeit wird der prozentuale Längenanteil am Längenintervall bestimmt. Diese Berechnung wird für alle gesetzlich üblichen Höchstgeschwindigkeitsvorgaben (30 km/h, 40 km/h, 50 km/h, 60 km/h, etc.) durchgeführt.

Sich häufig ändernde Geschwindigkeitsbegrenzungen beeinflussen die Geschwindigkeitswahl, die Ganghäufigkeiten und den Verbrauch, da normalerweise bei der Einfahrt in einen geschwindigkeitsbeschränkten Bereich ein Fahrzeug abgebremst und bei der Ausfahrt wieder beschleunigt wird. Umgekehrt führt eine ausgedehnte Geschwindigkeitsbegrenzung zu einem eher ruhigen verbrauchsmindernden Fahrstil. Diese Effekte werden durch die weiter unten definierte dynamisierte Pilotgeschwindigkeit genauer erfaßt.

Der prozentuale Längenanteil der Überholverbote am Längenintervall wird als makroskopisches Streckenmerkmal bestimmt. Die Überholverbote werden durch Schilder und mit durchgezogenen Leitlinien gekennzeichnet.

Das Fahren in Überholverbotszonen bedingt ein gleichmäßigeres Fahren als in überholverbotsfreien Abschnitten. In letzteren ist, aufgrund von vermehrten Überholaktivitäten, mit höheren Beschleunigungen und Geschwindigkeiten zu rechnen und somit mit höheren Motordrehzahlen. Daraus resultieren Triebstrangbelastungen, veränderte Ganganteile und ein höherer Verbrauch.

Die einzelnen Straßentypen des bundesdeutschen Straßennetzes werden nach Ortsstraßen, Landstraßen und Bundesautobahnen klassifiziert. Das makroskopische Streckenmerkmal besteht aus den prozentualen Längenanteilen jedes Straßentyps (Land- bzw. Ortsstraßen oder Autobahnen) am Längenintervall. Im Gegensatz zu Außerortsfahrten bedingen Ortsdurchfahrten eine langsamere Fahrweise, außerdem tritt eine größere Häufung von Vorfahrtsregelungen (z.B. Ampeln, Zebrastreifen etc.) und sonstigen Verkehrsflußstörungen auf. Geschwindigkeiten, Beschleunigungen und Gänge in Ortschaften können stärker schwanken, dies hat vor allem Auswirkungen auf die Triebstrangbelastung, Ganganteile, Gangwechselhäufigkeiten und Verbrauch.

Das deutsche Außerortsstraßennetz besteht zu mehr als 90% aus einspurigen Straßen. Die weiteren Anteile verteilen sich hauptsächlich auf zweispurige Straßen, eher seltener treten drei- und mehrspurige Straßen auf. Jede Fahrspuranzahl (1-, 2-oder 3- und mehrspurig) in eine Fahrtrichtung bildet eine Klasse. Das makroskopische Streckenmerkmal ist der prozentuale Längenanteil jeder Klasse am Längenintervall.

Mehrere Spuren in eine Fahrtrichtung lassen in der Regel ein Erreichen der individuell angestrebten Wunschgeschwindigkeit über längere Zeiträume zu. Überholvorgänge sind zwar häufiger, normalerweise aber nicht durch so starke Beschleunigungsvorgänge und Geschwindigkeitsänderungen gekennzeichnet wie bei Überholvorgängen auf Gegenspuren. Mehrspurige Straßen verursachen deshalb einen gleichmäßigeren Geschwindigkeitsverlauf auf höherem Niveau, große Anteile der hohen Gänge mit wenigen Gangwechseln und geringere Triebstrangbelastungen wegen der moderaten Beschleunigungsvorgänge. Dies führt bei gleichen Reisegeschwindigkeiten zu geringeren Verbräuchen als bei einspurigen Straßen.

Bei der kontinuierlichen Erfassung der Streckenparameter werden die ortsgültigen Parameter Vorfahrt-achten, Stop, Ampel, Rechts-vor-links, Zebrastreifen und Bahnübergang ereignisgesteuert erfaßt. An diesen Stellen muß die Geschwindigkeit häufig erheblich reduziert werden. Als makroskopisches Streckenmerkmal wird für alle ortsgültigen Parameter die Häufigkeit pro Kilometer definiert.

Die dynamisierte Pilotgeschwindigkeit beschreibt die gefahrene Geschwindigkeit in Abhängigkeit von den gesetzlich vorgegebenen Höchstgeschwindigkeiten, den Kurvengeschwindigkeiten und den im Verkehr üblichen Beschleunigungen und Verzögerungen. Äußere Verkehrseinflüsse, wie vorausfahrende Fahrzeuge, Ampeln etc. werden nicht berücksichtigt.

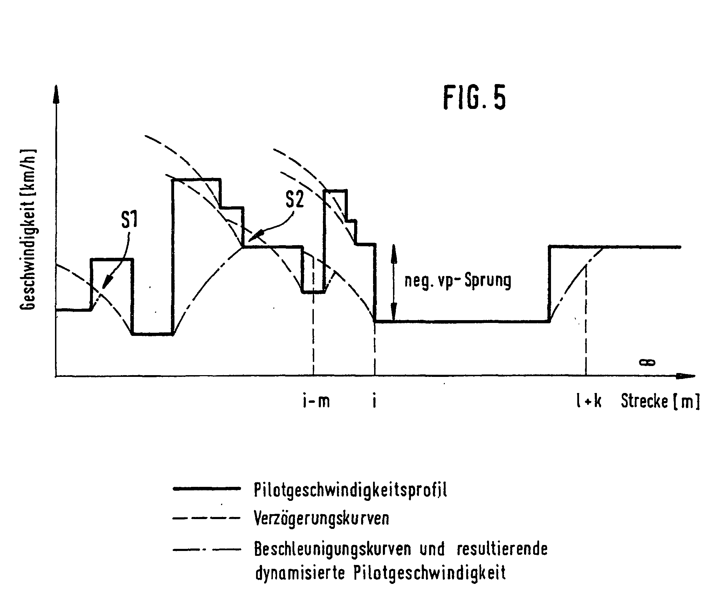

Die Pilotgeschwindigkeit weist definitionsbedingt Geschwindigkeitssprünge auf, siehe Fig. 5, die nur durch unendliche Beschleunigungen und Verzögerungen eines Fahrzeugs erreicht werden. Deshalb wird eine dynamisierte Pilotgeschwindigkeit berechnet, die im Verkehr übliche mittlere Beschleunigungen und Verzögerungen berücksichtigt. Aus der dynamisierten Pilotgeschwindigkeit werden als makroskopische Streckenmerkmale eine mittlere dynamisierte Pilotgeschwindigkeit, eine Varianz der dynamisierten Pilotgeschwindigkeit und eine Geschwindigkeitsdifferenz der dynamisierten Pilotgeschwindigkeit berechnet.

Diese makroskopischen Streckenmerkmale beeinflussen die Triebstrangbelastung, Ganganteile, Gangwechselhäufigkeiten und Bremsen, bedingt durch starke Schwankungen der Geschwindigkeiten mit Beschleunigungs- und Abbremsvorgängen. Im Folgenden werden die Berechnungsvorschriften für die Pilotgeschwindigkeit und die dynamisierte Pilotgeschwindigkeit beschrieben.

In der Richtlinie für die Anlage von Straßen, werden Mindestradien vorgegeben, die nicht unterschritten werden dürfen, damit eine Straße mit einer geplanten Entwurfsgeschwindigkeit sicher und komfortabel durchfahren werden kann. Bei trockener Fahrbahn können die Entwurfsgeschwindigkeiten bis zu 20% überschritten werden, da die Fahrer die vorgesehene Sicherheitsredundanz teilweise kompensieren.

Bei Kurvenfahrten wirkt die geschwindigkeits- und kurvenradienabhängige Querbeschleunigung auf Fahrer und Fahrzeug. Bei weiten, schneller gefahrenen Kurven mit großen Radien werden nicht so große Querbeschleunigungen akzeptiert wie bei engen, langsamer gefahrenen Kurven. Hier fühlt sich der Fahrer aufgrund der geringeren Geschwindigkeit sicherer und läßt größere Querbeschleunigungen zu. Für einen Normalfahrer können akzeptierte Querbeschleunigungen von 0,15 bis 0,4 g angenommen werden. Die akzeptierte Querbeschleunigung hängt auch vom Fahrer ab, denn erfahrene Formel-1-Fahrer fahren bis an die Grenze der Querbeschleunigung von 0,95 bis 1,0 g, die der Normalfahrer als unangenehm und risikoreich empfindet. Die radien- und querbeschleunigungsabhängige Kurvengeschwindigkeit wird für einen Normal- und Formel-1-Fahrer für die i-te Streckendifferenz wie folgt berechnet:

Zuerst wird die akzeptierte Querbeschleunigung eines Fahrers über den "beanspruchten seitlichen Reibwert $\mu_i$" bestimmt. Dieser nimmt mit zunehmenden Radien immer mehr ab. Dadurch wird der Effekt der abnehmenden Querbeschleunigung bei weiten, schnell durchfahrenen Kurven modelliert.

Zur Berechnung des beanspruchten seitlichen Reibwertes $\mu_i$ für Normalfahrer kann folgende Regressionsgleichung aufgestellt werden, die den Entwurfsgeschwindigkeitsansatz und die Ergebnisse von gemessenen Kurvengeschwindigkeiten berücksichtigt:

$$\mu_i = 0,3 \times e^{-0,045\left(\frac{R_i}{10}-1\right)} + 0,15$$

Der beanspruchte seitliche Reibwert des Formel-1-Fahrers wird mit konstant 0,9 festgelegt. Wenn $\mu_i$ feststeht kann die Kurvengeschwindigkeit vi auf trockener Straße wie folgt berechnet:

$$\nu_i = \sqrt{\mu_i \times R_i \times g}$$

$\mu_i$ = seitlicher Reibwert, $R_i$ = Kurvenradius [m],

$g$ = Erdbeschleunigung [m/s$^2$]

Bei Strecken mit engen Kurvenradien ist die angestrebte Kurven-geschwindigkeit oft kleiner als die gesetzlich vorgegebene Höchstgeschwindigkeit. Um die angestrebte Geschwindigkeit auf einer Streckendifferenz zu ermitteln, wird das Minimum aus der gesetzlichen Geschwindigkeitsbegrenzung und der oben beschriebenen fahrerabhängigen Kurvengeschwindigkeit gebildet. Dieses Minimum wird als Pilotgeschwindigkeit bezeichnet. Die Pilotgeschwindigkeit wird für den Normalfahrer und den Formel-1-Fahrer bestimmt. Dabei wird für die Minimumbildung jeweils die entsprechende Kurvengeschwindigkeit herangezogen.

Da auf Autobahnen nur eine generelle Richtgeschwindigkeit von 130 km/h besteht, würden die Pilotgeschwindigkeiten nur aus den autobahntypischen großen Kurvengeschwindigkeiten gebildet. Um extrem hohe Pilotgeschwindigkeiten zu vermeiden, wird auf Autobahnen eine Höchstgeschwindigkeit von 180 km/h vorgegeben.

Zur Vermeidung der Geschwindigkeitssprünge werden Geschwindigkeitsdifferenzen $\Delta v_i$ zugrundegelegt, die bei im Verkehr üblichen Beschleunigungen von 1 m/s$^2$ und Verzögerungen von -2 m/s$^2$ innerhalb einer Streckendifferenz si möglich sind. Zunächst wird aus den Bewegungsgesetzen die Berechnung der Strecken- und Geschwindigkeitsdifferenzen hergeleitet.

Fig. 4 beschreibt bei einer beschleunigten Bewegung die Weg- und Geschwindigkeitsänderung in einem Zeitintervall. Die Fläche unter dem Graphen entspricht der Streckendifferenz si beim Beschleunigen von vi-1 auf vi zwischen den Zeitpunkten ti-1 und ti. Es ergeben sich folgende Zusammenhänge:

$$\Delta v_i = a \times \Delta t_i \qquad \text{(Gleichung 1)}$$

$$s_i = sc_i + \Delta s_i = v_{i-1} \times \Delta t_i + \frac{1}{2}a \times \Delta t_i^2 \qquad \text{(Gleichung 2)}$$

$$v_i = v_{i-1} + \Delta v_i \qquad \text{(Gleichung 3)}$$

Durch Substitution von $\Delta t_i$ in Gleichung 2 ergibt sich $\Delta v_i$ zu:

$$\Delta v_i = -v_{i-1} + \sqrt{v_{i-1}^2 + 2a\Delta s_i} \qquad \text{(Gleichung 4)}$$

Gleichung 3 gilt für positive und negative Beschleunigungen, mit der Randbedingung: $v_{i-1}^2 + 2a\Delta s_i \geq 0$. Aus den Gleichungen 3 und 4 ergibt sich folgendes $v_i$:

$$v_i = \sqrt{v_{i-1}^2 + 2a\Delta s_i} \qquad \text{(Gleichung 5)}$$

Für eine Rückwärtsrechnung gilt für $v_{i-1}$:

$$v_{i-1} = \sqrt{v_i^2 - 2a\Delta s_i} \qquad \text{(Gleichung 6)}$$

Die dynamisierte Pilotgeschwindigkeit $vd_i$ wird daraufhin wie folgt berechnet:

Zunächst werden die Pilotgeschwindigkeiten $vp_i$, aus dem Minimum der gesetzlichen Geschwindigkeitsbegrenzung und der fahrerabhängigen Kurvengewschindigkeit berechnet. Für alle negativen Pilotgeschwindigkeitssprünge werden mit Gleichung 6 die Ausgangsgeschwindigkeiten $v_{i-m}$ ($m \geq 1$) bis etwa 400 m bei üblichen Verzögerungen rückwärts berechnet, die zu diesem $vp_i$ führen. Es ergeben sich die gestrichelt dargestellten Verzögerungskurven in Fig. 5. Auf 400 m Streckenlänge können bei Verzögerungen von -2 m/s$^2$ Geschwindigkeitsabnahmen bis zu 144 km/h realisiert werden. Größere Sprünge bei der Pilotgeschwindigkeit sind normalerweise nicht zu erwarten.

Bei positiven Pilotgeschwindigkeitssprüngen entspricht die Geschwindigkeitszunahme zunächst der berechneten Pilotgeschwindigkeit vor dem Sprung. Für die folgenden Streckenpunkte $s_{i+k}$ ($k > 1$) wird die Geschwindigkeit gemäß Gleichung 5, mit 1 m/s$^2$ solange erhöht, bis $vd_{i+k}$ die kleinste Verzögerungskurve (S1) eines vorausliegenden negativen Pilotgeschwindigkeitssprungs oder das Pilotgeschwindigkeitsprofil $vp_{i+k}$ (S2) schneidet. An jedem Streckenpunkt $s_i$ ist die dynamisierte Pilotgeschwindigkeit $vd_i$ das Minimum aus allen existierenden Beschleunigungsund Verzögerungskurven sowie der berechneten Pilotgeschwindigkeit $vp_i$.

Die mittlere dynamisierte Pilotgeschwindigkeit $\overline{vd}$ [km/h] ist das streckengewichtete arithmetische Mittel der dynamisierten Pilotgeschwindigkeiten im Längenintervall:

$$\overline{vd} = \frac{1}{\sum_{i=1}^{n} s_i} \times \sum_{i=1}^{n} vd_i \times s_i \qquad \text{(n gemäß Bed. 1)}$$

Die Varianz pro Kilometer [km/h$^2$] der dynamisierten Pilotgeschwindigkeit beschreibt für ein Längenintervall die mittlere quadratische Abweichung der Einzelwerte der dynamisierte Pilotgeschwindigkeiten von ihrem Mittel. Die Varianz ist ein Maß für die Abbrems- und Beschleunigungsvorgänge innerhalb eines Längenintervalls. Analog zu den in der Statistik üblicherweise definierten Varianz wird die Varianz der dynamisierten Pilotgeschwindigkeit pro Kilometer $\sigma^2$ wie folgt berechnet:

$$\sigma^2 = \frac{1}{n \times \sum\limits_{i=1}^{n} s_i} \times \sum\limits_{i=1}^{n} \left(vd_i - \overline{vd}\right)^2 \times 1000$$

(n gemäß Bed. 1)

Die Geschwindigkeitsdifferenz pro Kilometer [1/h] der dynamisierten Pilotgeschwindigkeit beschreibt die positiven Geschwindigkeitsänderungen der dynamisierten Pilotgeschwindigkeit im Längenintervall und zeigt somit die durchschnittlichen Beschleunigungsmöglichkeiten auf. Sie wird bestimmt als Division der Summe der positiven Geschwindigkeitsänderungen der dynamisierten Pilotgeschwindigkeit durch die Länge des Längenintervalls.

$$Geschwindigkeitsdifferenz = \frac{\sum\limits_{k=1}^{n} \Delta vd^+_k}{\sum\limits_{i=1}^{n} \Delta s_i}$$

(n gemäß Bed. 1)

Tabelle 4 zeigt eine Übersicht der makroskopischen Streckenmerkmale.

Tab. 4:

| Tabellarische Übersicht der makroskopischen Streckenmerkmale | |
| --- | --- |
| Makroskopische Streckenmerkmale | Beschreibung |
| Kurvigkeit | Summe der absoluten Winkeländerungen pro Längeneinheit in gon/km im Längenintervall |
| Kurvenanteil | Prozentualer Längenanteil der Kurven mit Radien < 500 m am Längenintervall |
| Klass. der horizontalen Linienführung | Klassifizierung der horizontalen Linienführung mit Hilfe der Kurvigkeit und dem Kurvenanteil |
| Mittlere Neigung | "Tendenz" der Fahrt: Neigung zwischen Anfang und Ende eines Streckenabschnitts |
| Steigung- und Gefälleabschnitte | Prozentuale Längenanteile von Steigungsund Gefälleklassen am Längenintervall |
| Maximale Neigungen | Maximale Steigung und Gefälle innerhalb eines Längenintervalls |
| Prozentanteile der Geschwindigkeitsbegrenzungen | Prozentuale Längenanteile vorgegebener Höchstgeschwindigkeiten am Längenintervall |
| Prozentanteile der Überholverbote | Prozentuale Längenanteile der Überholverbote am Längenintervall |
| Prozentanteile der Straßentypen | Prozentuale Längenanteile der Autobahnen, Orts- oder Landstraßen am Längenintervall |
| Prozentanteile der Spurenanzahl | Prozentuale Längenanteile 1-, 2-, oder 3- und mehrspuriger Straßen am Längenintervall |
| Ortsgültige makr. Streckenmerkmale | Häufigkeit ortsgültiger Parameter pro km im Längenintervall |
| Mittlere dyn. Pilotgeschwindigkeit | Streckengewichtetes arithmetisches Mittel der dyn. Pilotgeschwindigkeiten im Längeninterv. |

Tab. 4: (fortgesetzt)

| Tabellarische Übersicht der makroskopischen Streckenmerkmale | |
|---|---|
| Makroskopische Streckenmerkmale | Beschreibung |
| Varianz der dyn. Pilotgeschwindigkeit pro km | Mittlere quadratische Abweichung der Einzelwerte der dyn. Pilotgeschwindigkeiten pro km im Längenintervall |
| Geschwindigkeitsdifferenz der dyn. Pilotgeschwindigkeit | Positive Geschwindigkeitsänderungen der dyn. Pilotgeschwindigkeiten im Längenintervall |

Die Tabelle 5 zeigt beispielhaft die Ergebnisse der Berechnung von makroskopischen Streckenmerkmale für vier unterschiedliche Strecken.

| Strecke | 1 | 2 | 3 | 4 |
|---|---|---|---|---|
| Länge [m] | 415400 | 439702 | 276104 | 48106 |
| Kurvigkeit [gon/km] | 152,4 | 74,1 | 47,7 | 239,0 |
| Kurvenanteil [%] | 24,9 | 12,5 | 3,5 | 30,8 |
| Klass [%] weit und stetig | 79,0 | 94,0 | 96,0 | 56,0 |
| Klass [%] eng, aber stetig | 11,0 | 4,0 | 2,0 | 18,0 |
| Klass [%] unstetig und eng | 10,0 | 2,0 | 2,0 | 26,0 |
| mittl. Neigung [%] | 0,0 | -0,01 | 0,0 | 0,06 |
| Steigung 0 - 2% [%] | 30,0 | 45,3 | 36,0 | 28,2 |
| Steigung 2 - 5% [%] | 14,9 | 9,9 | 15,6 | 15,7 |
| Steigung 5 - 8% [%] | 10,4 | 1,0 | 1,08 | 8,5 |
| Steigung > 8% [%] | 0,3 | 0,1 | 0,0 | 0,7 |
| Gefälle 0 - 2% [%] | 22,5 | 32,5 | 31,3 | 21,7 |
| Gefälle 2 - 5% [%] | 15,2 | 9,7 | 14,5 | 18,8 |
| Gefälle 5 - 8% [%] | 8,5 | 1,4 | 1,5 | 6,0 |
| Gefälle > 8% [%] | 1,2 | 0,1 | 0,02 | 0,4 |
| max. Steigung [%] | 12,2 | 10,2 | 7,3 | 18,3 |
| max. Gefälle [%] | -18,9 | -10,1 | -13,7 | -16,2 |
| G 30 | 0,7 | 0,0 | 4,1 | 6,5 |
| 50 | 20,8 | 10,8 | 6,8 | 68,2 |
| 60 | 2,1 | 1,8 | 1,0 | 3,8 |
| 70 | 10,1 | 12,7 | 2,0 | 8,1 |
| 80 | 5,8 | 2,7 | 2,2 | 0,0 |
| 90 | 0,0 | 0,01 | 0,0 | 0,0 |
| 100 | 48,5 | 57,29 | 19,7 | 13,4 |

| | | | | | |
|---|---|---|---|---|---|
| | 120 | 0,0 | 0,1 | 0,0 | 0,0 |
| | keine Bgr | 12,0 | 14,6 | 64,2 | 0,0 |
| Überholverbot [%] | | 15,0 | 22,9 | 5,6 | 30,4 |
| Streckentyp [%] | BAB | 25,1 | 34,2 | 85,7 | 17,7 |
| | Land | 55,8 | 55,9 | 8,3 | 11,6 |
| | Ort | 19,1 | 9,9 | 6,0 | 70,7 |
| F.spur [%] | 1-Spur | 74,2 | 66,4 | 9,4 | 49,4 |
| | 2-Spuren | 25,6 | 18,0 | 63,7 | 44,4 |
| | 3- und mehr Spuren | 0,2 | 15,6 | 26,9 | 6,2 |
| Merkmal / 10 km | Stopstelle | 0,1 | 0 | 0,04 | 0,2 |
| | Vorf.-achten | 1 | 0,4 | 0,3 | 1,5 |
| | Ampel | 3,4 | 2,6 | 2 | 27 |
| | RvL | 0,05 | 0,03 | 0,1 | 0,6 |
| | Zebrastr. | 0,6 | 0,2 | 0,1 | 2 |
| | Bahnüberg. | 0,1 | 0,02 | 0 | 0 |
| Pilotgeschw. Norm | mittlere $v_p$ [km/h] | 85,0 | 96,0 | 135,4 | 55,2 |
| | Varianz [km/h²] | 3,1 | 2,6 | 8,8 | 6,8 |
| | $v_p$-Differenz [1/h] | 32,7 | 17,7 | 15,6 | 26,7 |
| Pilotgeschw. F1 | mittlere $v_p$ [km/h] | 88,2 | 98,0 | 141,2 | 56,2 |
| | Varianz [km/h²] | 3,2 | 2,8 | 9,7 | 6,6 |
| | $v_p$-Differenz [1/h] | 22,2 | 13,0 | 6,0 | 15,8 |

**Tab. 5:** Makroskopische Streckenmerkmale von Strecken

## Patentansprüche

1. Assistenzsystem zur Auswahl einer Strecke mit einer Rechnereinrichtung (1), einer Speichereinrichtung (2), einer Eingabeeinrichtung (4) und einer Ausgabeeinrichtung (5), wobei jede Strecke durch in der Speichereinrichtung (2) abgespeicherte, fahrtbeeinflussende Streckenparameter beschrieben ist, und dessen Rechnereinrichtung (1) nach einer Eingabe von Suchkriterien eine bestimmte Strecke auswählt und über die Ausgabeeinrichtung (5) ausgibt,
**dadurch gekennzeichnet,**
**daß** die Rechnereinrichtung (1) aus den fahrtbeeinflussenden Streckenparametern makroskopische Streckenmerkmale für jede Strecke ermittelt und abspeichert, die durch die Eingabe von Suchkriterien für makroskopische Streckenmerkmalen abfragbar sind.

2. Assistenzsystem nach Anspruch 1,
**dadurch gekennzeichnet,**

**daß** die Rechnereinheit (1) für eine gesuchte Strecke die eingegebenen makroskopischen Streckenmerkmale mit den für jede Strecke definierten makroskopischen Streckenmerkmalen vergleicht und die Strecke, deren makroskopische Streckenmerkmale den eingegebenen Streckenmerkmalen am nächsten kommt, auswählt und ausgibt.

**3.** Assistenzsystem nach Anspruch 1,
**dadurch gekennzeichnet,**
**daß** als makroskopische Streckenmerkmale eine horizontale Linienführung und/oder eine vertikale Linienführung und/oder eine dynamisierte Pilotgeschwindigkeit aus den fahrbeeinflussenden Streckenparametern berechnet werden.

**4.** Assistenzsystem nach Anspruch 3,
**dadurch gekennzeichnet,**
**daß** die vertikale Linienführung als makroskopische Streckenmerkmale eine Kurvigkeit und/oder einen Kurvenanteil und/oder eine Klassifizierung der horizontalen Linienführung umfaßt.

**5.** Assistenzsystem nach Anspruch 3,
**dadurch gekennzeichnet,**
**daß** die horizontale Linienführung als makroskopische Streckenmerkmale eine mittlere Neigung und/oder Steigungsund Gefälleabschnitte und/oder maximale Neigungen umfaßt.

**6.** Assistenzsystem nach Anspruch 3,
**dadurch gekennzeichnet,**
**daß** von der Rechnereinrichtung (1) die makroskopischen Streckenmerkmale für vorgebbare Längenintervalle berechnet werden.

**7.** Assistenzsystem nach Anspruch 1,
**dadurch gekennzeichnet,**
**daß** die makroskopischen Streckenmerkmale die Prozentanteile von Geschwindigkeitsbegrenzungen und/oder von Überholverboten und/oder Straßentypen und/oder Spurenanzahl umfassen.

**8.** Assistenzsystem nach einem der vorherigen Ansprüche,
**dadurch gekennzeichnet,**
**daß** das Assistenzsystem Teil eines Navigationssystems ist.

**9.** Assistenzsystem nach einem der vorherigen Ansprüche,
**dadurch gekennzeichnet,**
**daß** das Assistenzsystem zur Auswahl von Teststrecken für die Fahrzeugerprobung verwendet wird.

**Claims**

**1.** Assistance system for selecting a route with the aid of a computing device (1), a storage device (2), an input device (4) and an output device (5), each route being described by route parameters influencing the journey and stored in the storage device (2), and whose computing device (1) selects a specific route after an input of search criteria and outputs it via the output device (5), **characterized in that** the computing device (1) uses the route parameters influencing the journey to determine and store macroscopic route features for each route which can be interrogated by the input of search criteria for macroscopic route features.

**2.** Assistance system according to Claim 1, **characterized in that** for a route being sought the computing unit (1) compares the input macroscopic route features with the macroscopic route features defined for each route, and selects and outputs the route whose macroscopic route features come closest to the input route features.

**3.** Assistance system according to Claim 1, **characterized in that** calculated as macroscopic route features from the route parameters influencing the journey are a horizontal line trace and/or a vertical line trace and/or a dynamized pilot speed.

**4.** Assistance system according to Claim 3, **characterized in that** as macroscopic route features, the horizontal line trace comprises a curviness and/or a proportion of curves and/or a classification of the horizontal line trace.

**5.** Assistance system according to Claim 3, **characterized in that** as macroscopic route features the vertical line trace comprises a mean incline and/or upgrade and downgrade sections and/or maximum inclines.

**6.** Assistance system according to Claim 3, **characterized in that** the computing device (1) calculates the macroscopic route features for prescribable length intervals.

**7.** Assistance system according to Claim 1, **characterized in that** the macroscopic route features comprise the percentages of speed limitations and/or of overtaking bans and/or of road types and/or of number of lanes.

**8.** Assistance system according to one of the preceding claims, **characterized in that** the assistance system is part of a navigation system.

**9.** Assistance system according to one of the preceding claims, **characterized in that** the assistance system is used to select test routes for vehicle testing.

**Revendications**

**1.** Système d'assistance pour la sélection d'un parcours, comprenant un équipement (1) de calcul, un équipement (2) de mémorisation, un équipement (4) de saisie et un équipement (5) d'édition, chaque parcours étant décrit par des paramètres de parcours influençant le trajet qui sont mémorisés dans l'équipement (2) de mémorisation, et système dont l'équipement (1) de calcul sélectionne un parcours donné à la suite d'une saisie de critères de recherche, et l'édite au moyen de l'équipement (5) d'édition, **caractérisé en ce que** l'équipement (1) de calcul, à partir des paramètres de parcours influençant le trajet, détermine et mémorise pour chaque parcours des caractéristiques macroscopiques de parcours qui peuvent être interrogées par la saisie de critères de recherche pour des caractéristiques macroscopiques de parcours.

**2.** Système d'assistance selon la revendication 1, **caractérisé en ce que** l'équipement (1) de calcul, pour un parcours recherché, compare les caractéristiques macroscopiques de parcours saisies aux caractéristiques macroscopiques de parcours définies pour chaque parcours, et sélectionne et édite le parcours dont les caractéristiques macroscopiques de parcours sont les plus proches des caractéristiques macroscopiques de parcours saisies.

**3.** Système d'assistance selon la revendication 1, **caractérisé en ce qu'**on calcule comme caractéristiques macroscopiques de parcours, à partir des paramètres de parcours influençant le trajet, un tracé horizontal de chaussée et/ou un tracé vertical de chaussée et/ou une vitesse pilote dynamisée.

**4.** Système d'assistance selon la revendication 3, **caractérisé en ce que** le tracé horizontal de chaussée comprend, comme caractéristiques macroscopiques de parcours, une sinuosité et/ou une proportion de virages et/ou une classification du tracé horizontal de chaussée.

**5.** Système d'assistance selon la revendication 3, **caractérisé en ce que** le tracé vertical de chaussée comprend, comme caractéristiques macroscopiques de parcours, une inclinaison moyenne et/ou des tronçons à pente ascendante et à pente descendante et/ou des inclinaisons maximales.

**6.** Système d'assistance selon la revendication 3, **caractérisé en ce que** l'équipement (1) de calcul calcule les caractéristiques macroscopiques de parcours pour des intervalles de longueur prescriptibles.

**7.** Système d'assistance selon la revendication 1, **caractérisé en ce que** les caractéristiques macroscopiques de parcours comprennent les pourcentages de limitations de vitesse et/ou d'interdictions de dépassement et/ou de types de routes et/ou de nombre de voies.

**8.** Système d'assistance selon l'une des revendications précédentes, **caractérisé en ce que** le système d'assistance fait partie d'un système de navigation.

**9.** Système d'assistance selon l'une des revendications précédentes, **caractérisé en ce que** le système d'assistance est utilisé pour la sélection de parcours d'essai pour l'essai du véhicule.

FIG.1

$R_i$ = Kurvenradius
$\alpha_i$ = Winkeländerung im Radialmaß
$s_i$ = zurückgelegter Weg

FIG.2

Grundfläche $\Delta x$

Höhe

mittlere Neigung

s

g

$B_{(x_2;h_2)}$

$\alpha$

absolute
Höhendifferenz $\Delta h$

Strecke $\infty$

$A_{(x_1;h_1)}$

## FIG. 3

Geschwindigkeit v

$v_i$

$\Delta s_i = \frac{1}{2}\alpha \times \Delta t_i^2$

$\Delta v_i = \alpha \times \Delta t_i$

$v_{i-1}$

$sc_i = v_{i-1} \times \Delta t_i$

$t_{i-1}$

$t_i$

Zeit t

## FIG. 4

FIG. 5

neg. vp- Sprung

i-m      i                    l+k    Strecke [m]

——————   Pilotgeschwindigkeitsprofil

— — — —   Verzögerungskurven

—·———   Beschleunigungskurven und resultierende
         dynamisierte Pilotgeschwindigkeit